# EUROPÄISCHE PATENTANMELDUNG

(11) **EP 1 574 771 A2**
(43) Veröffentlichungstag der Anmeldung: **14.09.2005**
(21) Anmeldenummer: 05002885.1
(22) Anmeldetag: 11.02.2005
(51) Int. Cl.: F16K 31/122, F16K 39/02

(54) **Ventil für den Einsatz in Streckblasmaschinen**

(30) Priorität: 09.03.2004 CH 3862004
(71) Anmelder: EUGEN SEITZ AG, CH-8623 Wetzikon (CH)
(72) Erfinder: Rymann, Othmar, 8362 Balterswil (CH)
(74) Vertreter: Troesch Scheidegger Werner AG

(57) **Zusammenfassung**

Beim Ventil für den Einsatz in Streckblasmaschinen für die Fertigung von Hohlkörpern aus Kunststoff, mit einem axial im Ventilgehäuse (2) verschiebbar angeordneten Steuerkolben (1), einer Speisedruckeingangsleitung (4), einer Speisedruckausgangsleitung (5) und einer Steuerdruckleitung (13), steht eine erste Stirnfläche (3) des Steuerkolbens (1) mit der Speisedruckeingangsleitung (4) in Verbindung. Diese erste Stirnfläche (3) schliesst in geschlossener Stellung des Ventils die Speisedruckeingangsleitung (4) gegenüber der Speisedruckausgangsleitung (5) ab. Weiter ist ein Verbindungskanal (9) zwischen dieser ersten Stirnfläche (3) und der gegenüberliegenden zweiten Stirnfläche (7) ausgebildet, wobei in geschlossener Stellung des Steuerkolbens (1) die Wirkfläche der zweiten Stirnfläche (7) grösser ist als die Wirkfläche der ersten Stirnfläche (3). Weiter weist der Steuerkolben (1) eine mit der Steuerdruckleitung (13) kommunizierende und gegenüber der Speisedruckeingangsleitung (4) getrennte Steuerfläche (11) auf.

## Beschreibung

Die vorliegende Erfindung betrifft ein Ventil nach dem Oberbegriff von Anspruch 1.

Für die Erzeugung von Kunststoffflaschen, insbesondere von PET-Flaschen, wird ein Rohling oder Vorformling in der Fertigungsmaschine in einer Form in der Regel in zwei Schritten in seine endgültige Form aufgeblasen. Hierfür weist der Rohling bereits im Wesentlichen den fertigen Flaschenkopf auf, welcher in der Blasform der Fertigungsmaschine gehalten und mit einer Luftzufuhrleitung verbunden wird. Durch Einblasen von Luft durch den Flaschenkopf wird der Rohling aufgeblasen und schliesslich in seine endgültige Form gebracht.

Dies erfolgt vorteilhaft in einem zweistufigen Verfahren, wobei zuerst ein Vorblasen mit einem Druckwert zwischen 6 bis 20 bar erfolgt, und danach das Fertigblasen mit einem Druckwert von 30 bis 40 bar erfolgt.

Um eine wirtschaftliche Produktion zu gewährleisten müssen diese Prozesse so rasch als möglich ablaufen. Hierfür wird herkömmlicherweise eine Ventilanordnung bestehend aus zwei Ventilen, einem Vorblasventil und einem Blasventil, welche meistens auf einem gemeinsamen Block angeordnet sind.

Das grosse Problem bei der Auslegung solcher Ventilanordnungen liegt darin, dass durch die zwei Stufen unterschiedliche Luftmengen geliefert, d.h. verarbeitet werden müssen, und die Steuerung der Ventile bei hohen Produktionsraten anspruchsvoll ist. Weiter werden aufgrund der hohen Druckraten hohe Sicherheitsvorkehrungen gefordert, um insbesondere eine Gefährdung bei Systemausfällen wie beispielsweise Leitungsbrüchen zu minimieren oder zu verhindern.

Die Aufgabe der vorliegenden Erfindung bestand darin, ein Ventil zu finden, welches Streckblasmaschinen mit grossen Luftmengen auf einem hohen Druckniveau mit hoher Betriebssicherheit versorgt.

Diese Aufgabe wird erfindungsgemäss durch ein Ventil mit den Merkmalen nach Anspruch 1 gelöst. Weitere, bevorzugte Ausführungsformen ergeben sich aus den Merkmalen der weiteren Ansprüche 2 bis 6.

Beim erfindungsgemässen Ventil für den Einsatz in Streckblasmaschinen für die Fertigung von Hohlkörpern aus Kunststoff, mit einem axial im Ventilgehäuse verschiebbar angeordneten Steuerkolben, einer Speisedruckeingangsleitung, einer Speisedruckausgangsleitung und einer Steuerdruckleitung, ist vorteilhaft eine erste Stirnfläche des Steuerkolbens gegen die Speisedruckeingangsleitung gerichtet und schliesst diese in geschlossener Stellung gegenüber der Speisedruckausgangsleitung ab. Weiter ist mindestens ein Verbindungskanal zwischen dieser ersten Stirnfläche und der gegenüberliegenden zweiten Stirnfläche ausgebildet, wobei in geschlossener Stellung des Steuerkolbens die Wirkfläche der zweiten Stirnfläche grösser ist als die Wirkfläche der ersten Stirnfläche. Weiter weist der Steuerkolben eine mit der Steuerdruckleitung kommunizierende und gegenüber der Speisedruckeingangsleitung getrennte Steuerfläche auf.

Der grosse Vorteil dieser Anordnung liegt darin, dass der Speisedruck, welcher für das Blasen der Vorformlinge eingesetzt wird, auch für das Schliessen des Ventils eingesetzt ist. Der Steuer- oder Pilotdruck, welcher ein wesentlich kleineres Druckniveau aufweist, wird vorteilhaft für das Öffnen des Ventils eingesetzt. Wenn nun der Steuerdruck ausbleibt, beispielsweise durch einen Leitungsbruch in der Druckzuführung, so wird das Ventil geschlossen bleiben und es kommt damit nicht zu einer ungewollten Speisedruckzufuhr zur Bearbeitungsmaschine.

Vorzugsweise ist der Steuerkolben als kreiszylindrischer Körper ausgebildet. Durch die kreissymmetrische Form kann eine optimale Ventilwirkung erzielt werden.

Vorzugsweise ist ein einziger, in der Längsachse des Steuerkolbens angeordneter Verbindungskanal ausgebildet, welcher vorzugsweise als zylindrische Bohrung ausgeführt ist. Damit wird eine zuverlässige Verbindung der beiden Stirnseiten des Steuerkolbens mit der Speisedruckleitung erreicht, welche auch einfach und kostengünstig in der Herstellung ist.

Vorzugsweise ist die Steuerfläche zwischen den beiden Stirnflächen des Steuerkolbens angeordnet, vorzugsweise als im Wesentlichen senkrecht zur Längsachse des Steuerkolbens ausgebildete Ringfläche. Damit wird ein sehr kompakter Aufbau des Ventils erzielt. Auch die Anordnung von Dichtflächen zwischen den den Speisedruck resp. den Steuerdruck aufweisenden Kammern kann damit optimiert werden.

Vorzugsweise weist die erste Stirnfläche des Steuerkolbens einen axial vorstehenden, geschlossenen Kragen, vorzugsweise in Ringform, auf. Dieser Kragen ist vorzugsweise derart ausgebildet, dass in geschlossenem Zustand die mit der Speisedruckeingangsleitung in Verbindung stehende Wirkfläche der Stirnfläche kleiner ist, als in offenem Zustand des Steuerkolbens. Damit wird beim Öffnen des Ventils die Wirkfläche, welche mit dem hohen Speisedruck in Verbindung steht, vergrössert und damit das Ventil resp. der Steuerkolben schnell in die Öffnungsstellung gebracht. Das Auslösen des Öffnungsvorganges erfolgt allein durch Aufbau von Steuerdruck und ist damit praktisch unabhängig vom Speisedruck. Damit eignet sich die Ventilanordnung sowohl für die Lieferung von Luft für das Vorblasen, welches in der Regel auf einem Druckniveau von 6 bis 20 bar erfolgt, wie auch für das Fertigblasen auf einem Druckniveau von 35 bis 40 bar.

Vorzugsweise ist der Steuerkolben in Schliessrichtung mittels eines Federelementes abgestützt, vorzugsweise mittels einer Druckfeder. Damit weist das Ventil vorteilhaft einen definierten Ausgangszustand auf, nämlich die geschlossene Stellung, unabhängig vom Druckniveau sowohl des Speisedrucks und des Steuerdrucks.

Weiter wird erfindungsgemäss die Verwendung des erfindungsgemässen Ventils in Streckblasmaschinen sowohl für das Vorblasen wie auch für das Fertigblasen von PET-Flaschen beansprucht. Damit kann eine sichere Versorgung der Streckblasmaschinen mit Druckluft auf dem gewünschten Druckniveau mit einem einzigen Ventil gewährleistet werden.

Ein Ausführungsbeispiel der vorliegenden Erfindung wird nachstehend anhand von Figuren noch näher erläutert. Es zeigen
Fig. 1 schematisch den Längsschnitt durch ein erfindungsgemässes Ventil in geschlossener Stellung;
Fig. 2 den Längsschnitt nach Figur 1 in geöffneter Stellung;
Fig. 3 schematisch den Längsschnitt durch eine alternative Ausführungsform des erfindungsgemässen Ventils.

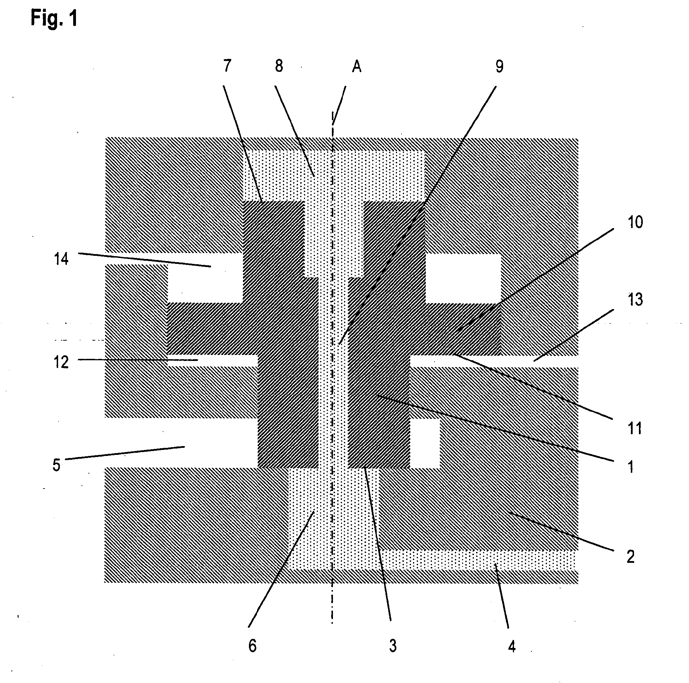

Figur 1 zeigt schematisch die Ansicht des Längsschnittes durch ein erfindungsgemäss aufgebautes Ventil in der geschlossenen Stellung. Der Steuerkolben 1 ist dabei im Ventilgehäuse 2 entlang seiner Achse A längsverschiebbar angeordnet. In der dargestellten, geschlossenen Stellung schliesst die untere Stirnfläche 3 des Steuerkolbens 1 die Speisedruckeingangsleitung 4 von der Speisedruckausgangsleitung 5 dichtend ab.

Die Speisedruckausgangsleitung 5 steht in Verbindung mit der Fertigungsmaschine beispielsweise für PET-Flaschen (nicht dargestellt).

Die Speisedruckeingangsleitung 4 mündet in einen unteren Ventilraum 6, welcher mit der unteren Stirnfläche 3 des Steuerkolbens 1 in Verbindung steht. Die obere Stirnfläche 7 des Steuerkolbens 1 mündet in einen oberen, geschlossenen Ventilraum 8. Im Steuerkolben 1 ist eine Verbindungsleitung 9 ausgebildet, welche damit eine Verbindung zwischen dem unteren Ventilraum 6 und dem oberen Ventilraum 8 schafft.

Dadurch, dass die obere Stirnfläche 7 erfindungsgemäss eine grössere Wirkfläche aufweist als die untere Stirnfläche 3, wird der Steuerkolben 1 bei positivem Speisedruck in der Speisedruckeingangsleitung 4 und somit gleichem Druck sowohl im unteren Ventilraum 6 wie auch im oberen Ventilraum 8 in der dargestellten geschlossenen Position pneumatisch fixiert. Damit wird ein selbständiger Schliessmechanismus beim Auftreten von positivem Druck in der Speisedruckeingangsleitung 4 erzielt, der im Wesentlichen unabhängig vom Niveau des Druckes ist.

Die entsprechenden Flächenverhältnisse der unteren und oberen Stirnflächen 3 resp. 7 können vorteilhaft durch eine zylindrische Ausführung des Steuerkolbens 1 erreicht werden, wobei der Durchmesser des Steuerkolbens im Bereich der oberen Stirnfläche 7 grösser ist als der Durchmesser im Bereich der unteren Stirnfläche 3 resp. des Durchmessers des unteren Ventilraumes 6.

Der Steuerkolben 1 weist nun weiter einen radial nach Aussen vorstehenden Ring 10 auf, welcher radial gegenüber dem Gehäuse 2 abgedichtet ist. Die untere Ringfläche dient als Steuerfläche 11 und liegt in einem Steuerraum 12, welcher mit der Steuerdruckleitung 13 in Verbindung steht.

Die obere Ringfläche weist gegen einen weiteren Ventilraum 14, welcher offen ist und damit mit der Umgebung in Verbindung steht, d.h. Umgebungsdruck aufweist.

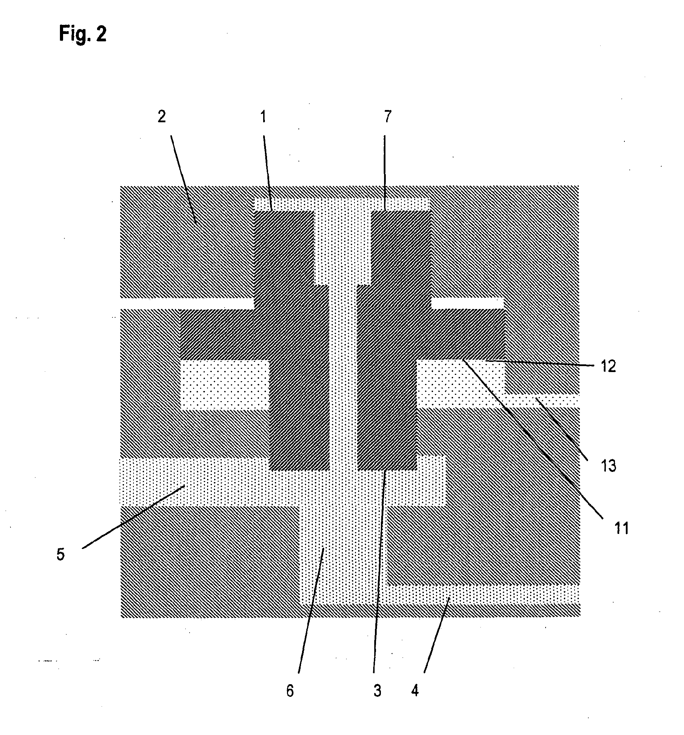

Wenn nun über die Steuerdruckleitung 13 im Steuerraum 12 ein Druck aufgebaut wird, so wirkt dieser auf die Steuerfläche 11 des Steuerkolbens 1 und kann damit den Steuerkolben 1 nach oben in die geöffnete Stellung, wie sie in Figur 2 ebenfalls schematisch dargestellt ist, verschieben.

Vorteilhaft wird hierfür die Steuerfläche 11 grösser gewählt als die Differenz zwischen der oberen und unteren Stirnfläche 7 resp. 3 des Steuerkolbens 1. Damit genügt für die Öffnung des Ventils ein kleinerer Steuerdruck als der in der Speisedruckzuführleitung 4 herrschende Speisedruck. Beispielsweise kann damit mit einem Steuerdruck von 6 bar das Ventil mit einem Speisedruck von 40 bar geöffnet werden.

Bei Wegnahme des Steuerdruckes in der Steuerdruckleitung 13 wird der Steuerkolben 1 durch den Speisedruck, d.h. den Druckverhältnissen im oberen resp. unteren Ventilraum 8 resp. 6, wieder nach unten bewegt und schliesst somit das Ventil. Dies geschieht auch automatisch, wenn der Steuerdruck ungewollt zusammenbricht, beispielsweise infolge eines Versagens der Steuerdruckleitung. Damit wird einfach, automatisch und zuverlässig verhindert, dass ungewollt aufgrund des Fehlens des Steuerdruckes der Speisedruck unbeabsichtigt in die Speisdruckausgangsleitung 5 gelangt und damit zu Folgeschäden oder Gefährdung von Personen im Bereich der Fertigungsmaschine führt.

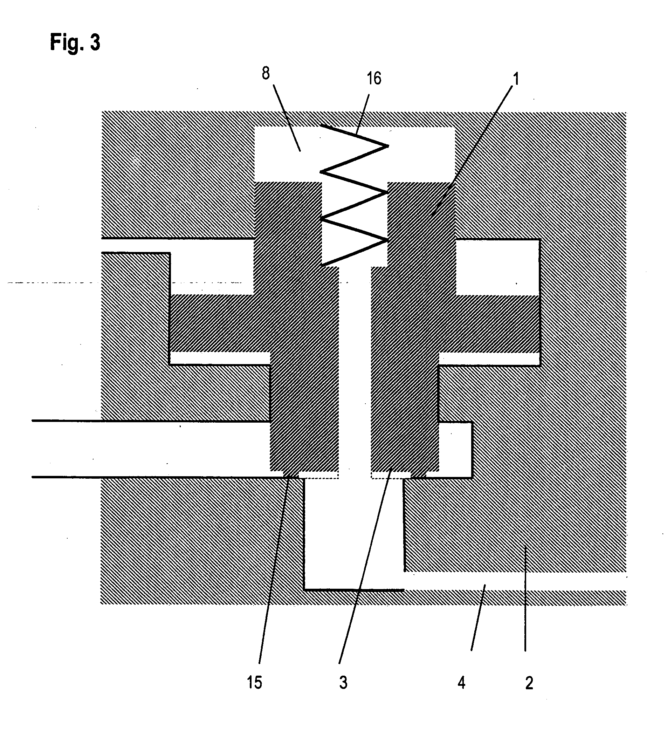

In Figur 3 ist noch eine weitere Ausführungsform eines erfindungsgemässen Ventils ebenfalls schematisch im Längsschnitt dargestellt. In dieser Ausführung weist die untere Stirnfläche 3 des Steuerkolbens 1 einen nach unten ragenden, kreisförmig geschlossenen Kragen 15 auf. Durch die kleine Auflagefläche des Kragens 15 auf dem Ventilgehäuse 2 wird eine verbesserte Dichtwirkung im Vergleich zu einer breiten Auflagefläche geschaffen. Dadurch, dass der Kragen nicht am Rand des Steuerkolbens 1 angeordnet ist, sondern radial nach Innen versetzt ist, wird im Moment des Öffnen des Ventils die Wirkfläche der unteren Stirnfläche 3 des Steuerkolbens 1 vergrössert und damit die Öffnungswirkung durch Reduktion der resultierenden Schliesskraft durch den Speisedruck vorteilhaft unterstützt. Damit wird insbesondere eine schnelle Ansprechzeit resp. Öffnungszeit des Ventils unterstützt, welche praktisch unabhängig von der Höhe des Speisedruckes ist.

Damit eignet sich das Ventil sowohl für den Einsatz im mittleren Druckbereich von ca. 6 bis 20 bar, wie auch im hohen Druckbereich bis zu 40 bar. Für den Einsatz in Streckblasmaschinen kann damit das Ventil in einer einheitlichen Baugrösse sowohl für das Vorblasen wie auch für das Fertigblasen eingesetzt werden.

Weiter ist im Bereich des oberen Ventilraumes 8 eine Druckfeder 16 angeordnet, welche den Steuerkolben 1 in die geschlossene Ausgangslage nach Figur 1 drückt. Damit wird vorteilhaft ein definierter Grundzustand, nämlich die geschlossene Stellung, des Ventils erreicht, auch wenn die Speisedruckzuführleitung 4 nicht mit einem Speisedruck beaufschlagt ist.

## Patentansprüche

1. Ventil für den Einsatz in Streckblasmaschinen für die Fertigung von Hohlkörpern aus Kunststoff, mit einem axial im Ventilgehäuse (2) verschiebbar angeordneten Steuerkolben (1), einer Speisedruckeingangsleitung (4), einer Speisedruckausgangsleitung (5) und einer Steuerdruckleitung (13), **dadurch gekennzeichnet, dass** eine erste Stirnfläche (3) des Steuerkolbens (1) mit der Speisedruckeingangsleitung (4) in Verbindung steht und diese in geschlossener Stellung des Ventils gegenüber der Speisedruckausgangsleitung (5) äbschliesst und dass weiter mindestens ein Verbindungskanal (9) zwischen dieser ersten Stirnfläche (3) und der gegenüberliegenden zweiten Stirnfläche (7) ausgebildet ist, wobei in geschlossener Stellung des Steuerkolbens (1) die Wirkfläche der zweiten Stirnfläche (7) grösser ist als die Wirkfläche der ersten Stirnfläche (3) und dass der Steuerkolben (1) weiter eine mit der Steuerdruckleitung (13) kommunizierende und gegenüber der Speisedruckeingangsleitung (4) getrennte Steuerfläche (11) aufweist.

2. Ventil nach Anspruch 1, **dadurch gekennzeichnet, dass** der Steuerkolben (1) als kreiszylindrischer Körper ausgebildet ist.

3. Ventil nach Anspruch 1 oder 2, **dadurch gekennzeichnet, dass** ein einziger, in der Längsachse des Steuerkolbens (1) angeordneter Verbindungskanal (9) ausgebildet ist, vorzugsweise als zylindrische Bohrung ausgeführt ist.

4. Ventil nach einem der Ansprüche 1 bis 3, **dadurch gekennzeichnet, dass** die Steuerfläche (11) zwischen den beiden Stirnflächen (3;7) des Steuerkolbens (1) angeordnet ist, vorzugsweise als im Wesentlichen senkrecht zur Längsachse (A) des Steuerkolbens (1) ausgebildete Ringfläche (11).

5. Ventil nach einem der Ansprüche 1 bis 4, **dadurch gekennzeichnet, dass** die erste Stirnfläche (3) des Steuerkolbens (1) einen axial vorstehenden, geschlossenen Kragen (15), vorzugsweise in Ringform, aufweist, vorzugsweise derart, dass in geschlossenem Zustand des Ventils die mit der Speisedruckeingangsleitung (4) in Verbindung stehende Wirkfläche der Stirnfläche (3) kleiner ist, als in offenem Zustand des Ventils.

6. Ventil nach einem der Ansprüche 1 bis 5, **dadurch gekennzeichnet, dass** der Steuerkolben (1) in Schliessrichtung mittels eines Federelementes (16) abgestützt ist, vorzugsweise einer Druckfeder.

7. Verwendung eines Ventils nach einem der Ansprüche 1 bis 6 in Streckblasmaschinen sowohl für das Vorblasen wie auch für das Fertigblasen von PET-Flaschen.
